# EUROPÄISCHE PATENTSCHRIFT

(11) **EP 1 701 863 B1**
(45) Veröffentlichungstag und Bekanntmachung des Hinweises auf die Patenterteilung: **27.01.2010**
(21) Anmeldenummer: 04804016.6
(22) Anmeldetag: 17.12.2004
(51) Int. Cl.: B60P 7/08

(54) **LASTSCHIENE**
LOAD-BEARING RAIL
RAIL DE CHARGE

(30) Priorität: 08.01.2004 DE 102004001367
(43) Veröffentlichungstag der Anmeldung: 20.09.2006
(73) Patentinhaber: Bayerische Motoren Werke Aktiengesellschaft, 80809 München (DE); BOS GmbH & Co. KG, 73760 Ostfildern (DE)
(72) Erfinder: STOECKL, Siegfried, 84076 Pfeffenhausen (DE); SCHLECHT, Werner, P., 71665 Vaihingen (DE); SEEG, Thomas, 73760 Ostfildern (DE); SPARRER, Henning, 73230 Kirchheim (DE)
(74) Vertreter: Günther, Hans Peter
(86) Internationale Anmeldenummer: PCT/EP2004/014413
(87) Internationale Veröffentlichungsnummer: WO 2005/065993

(56) Entgegenhaltungen:
- EP-A- 1 072 468
- EP-A- 1 300 283
- DE-A1- 10 047 542
- DE-A1- 10 100 712
- DE-A1- 19 930 763
- US-A1- 2004 222 260

## Beschreibung

Die Erfindung betrifft eine Lastschiene für den Laderaum eines Kraftfahrzeuges, welche zur Aufnahme einer darin verschieb- und arretierbar geführten Lastöse dient.

Aus der EP 1 300 283 A ist bereits eine Lastschiene für den Laderaum eines Kraftfahrzeuges bekannt, wobei die Lastschiene zur Aufnahme einer darin verschieb- und arretierbar geführten Lastöse dient. Ferner ist die Lastschiene mit einer seitlich abstehenden Lasche versehen, welche als Auflager für einen Laderaumboden dient.

Aus der DE 101 00 712 A1 ist ein Ladeboden bekannt, der über seitlich angeordnete Teleskopschienen in einem Kraftfahrzeug montiert und heckseitig gleitend aus dem Kraftfahrzeug herausziehbar ist. Die Teleskopschienen weisen jeweils wenigstens eine Solldeformationsstelle auf.

Aus der DE 199 30 763 ist eine Lastschiene bekannt, die ebefalls eine Sollbruchstelle aufweist.

Aus der US 2004/222260 A1 ist eine Lastschiene bekannt, die ebenfalls ein Auflager für einen Laderaumboden aufweist.

Lastschienen sind allgemein bekannt. Sie sind im Lade- bzw. Kofferraum eines PKW's starr befestigt. Die Funktion dieser Lastschienen besteht darin, Lastösen, welche auch als Verzurrösen bezeichnet werden und oftmals die Form eines Hakens aufweisen, im Kofferraum eines PKWs verschiebbar festzulegen. Diese Lastösen dienen dazu, Gegenstände mittels Gurten zu verzurren, um hierdurch ein Verrutschen der Gegenstände während der Fahrt zu verhindern ein solches Verzurren ist wichtig, da es sich in der Vergangenheit gezeigt hat, dass schwere im Kofferraum befindliche Gegenstände, wenn sie während der Fahrt verrutschen, zu einem anderen Fahrverhalten des PKWs führen, was insbesondere in Extremsituationen wie schneller Kurvenfahrt, problematisch sein kann. All dies kann bei entsprechender Verzurrung der Gegenstände mittels Gurten an den Lastösen verhindert werden.

Es hat sich jedoch als nachteilig herauskristallisiert, dass die bekannten Lastschienen, welche die Lastösen verschieblich aufnehmen, ein zusätzliches Bauteil darstellen. Denn zusätzlich zu den Lastschienen wird en Rahmen zur Aufnahme des Laderaumbodens benötigt. Die Lastschienen stellen somit ein Bauteil dar, welches nicht nur das Gesamtgewicht des PKWs erhöht und die Teilevielfalt vergrößert, sondern auch die Herstellung des gesamten PKW's infolge zusätzlicher Produktions- und Montagekosten für die Lastschienen verteuert.

Es ist daher Aufgabe der vorliegenden Erfindung, eine Lastschiene für den Laderaum eines Kraftfahrzeugs zu schaffen, welche weitere Funktionen übernehmen kann, um so sowohl Gewicht zu sparen als auch die Teilevielfalt zu verringern und dadurch Produktions- und Montagekosten zu senken.

Die erfindungsgemäße Lastschiene mit den Merkmalen des Anspruchs 1 hat den Vorteil, dass die Lastschiene kein zusätzliches Bauteil mehr darstellt, sondern gleichzeitig zur Auflage des Laderaumbodens dient. Dadurch können Montage- und Produktionskosten sowie zusätzliche Arbeitsgänge eingespart werden.

Durch die in den Unteransprüchen aufgeführten Merkmale sind vorteilhafte Weiterbildungen der im Anspruch 1 angegebenen Lastschiene möglich.

Nach einer vorteilhaften Ausgestaltung ist die Lasche gegenüber der Oberseite der Lastschiene um die Dicke des Laderaumbodens zurückversetzt, so dass der Laderaumboden und die Oberkante der Lastschiene in einer Ebene liegen. Dies ist insbesondere bei der Beladung von Vorteil, da der Laderaum keine vorstehenden Kanten und/oder Ecken aufweist, sondern im Wesentlichen eine ebene Fläche bildet.

Vorteilhafterweise ist die Lastschiene auf der der Lasche gegenüberliegenden Seite mit einer Aufnahme für eine Seitenverkleidung o. dgl. versehen. Dies führt zu einer weiteren Vereinfachung bei der Montage, da die Lastschiene nicht nur den Laderaumboden, sondern auch die Seitenverkleidung o. dgl. lagesicher aufnehmen kann.

Die Lastschienen sind jeweils definiert so geschwächt, dass die Lastschienen bei einem Auffahrunfall mindestens einmal einknicken und sich nach oben und/oder zur Seite hin verformen.

Gemäß einer vorteilhaften Ausführungsform der Erfindung weist die Lastschiene einen im Querschnitt C-förmigen Kanal auf, in den ein ebenfalls im Querschnitt C-förmiger Stahleinleger einsetzbar ist, der an seinen Rändern mit Rastzähnen zur Festlegung der Lastöse versehen ist. Hierdurch bietet sich die Möglichkeit, die Rastzähne für die Lastöse direkt in das innere Profil einzustanzen. Weiterhin bedingt das äußere Profil die vorteilhafte Wirkung, dass die Seitenverkleidung mittels des äußeren Profils befestigbar ist sowie der Ladeboden darin aufgenommen werden kann. Folglich ergibt sich eine Vereinfachung der Befestigung der Seitenverkleidung und des Laderaumbodens im Laderaum eines Fahrzeuges sowie eine ansehnlichere Optik.

Aus Gründen der Gewichtsersparnis kann die Lastschiene vorteilhafterweise aus Aluminium o. dgl. bestehen.

Weitere Vorteile und Merkmale der vorliegenden Erfindung werden aus der nachfolgenden detaillierten Beschreibung eines Ausführungsbeispiels einer erfindungsgemäßen Lastschiene im Zusammenhang mit den beigefügten Zeichnungen ersichtlich. Es zeigen:
- Fig. 1: eine perspektivische Explosionsansicht einer erfindungsgemäßen Lastschiene,
- Fig. 2: eine perspektivische Ansicht einer im Zusammenhang mit der erfindungsgemäßen Lastschiene verwendeten Lastöse,
- Fig. 3: einen Querschnitt durch die erfindungsgemäße Lastschiene,
- Fig. 4: einen Querschnitt durch eine weitere Ausführungsform der erfindungsgemäßen Lastschiene,
- Fig. 5: einen Querschnitt durch die erfindungsgemäße Lastschiene mit aufgelegtem Laderaumboden und eingesetzter Seitenverkleidung, und
- Fig. 6: einen Querschnitt durch die erfindungsgemäße Lastschiene mit aufgelegtem Laderaumboden, wobei die Aufnahme für die Seitenverkleidung so ausgebildet ist, dass sie gleichzeitig als Lager für eine in der Seitenverkleidung vorgesehene Klappe dient.

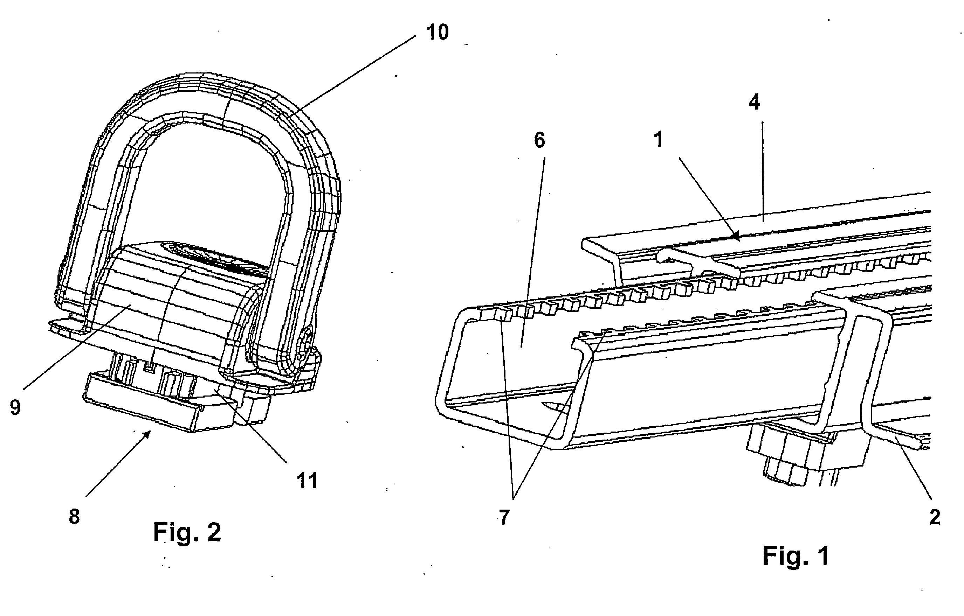

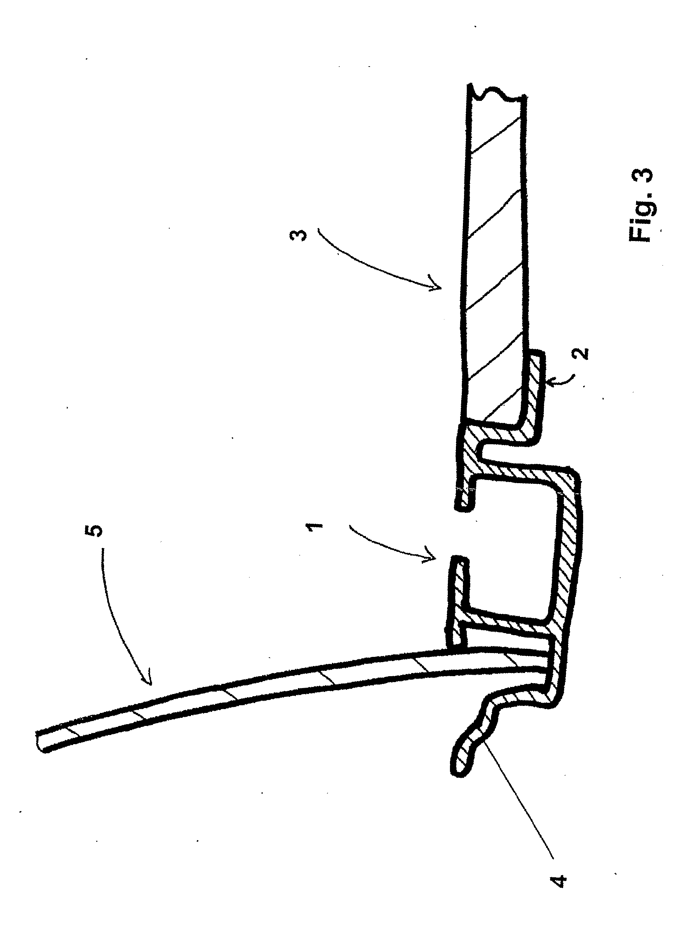

In den Fig. 1 und 3 ist die erfindungsgemäße Lastschiene 1 in einer perspektivischen Explosionsansicht (Fig. 1) und einem Schnitt (Fig. 3) gezeigt. Die Lastschiene 1 besteht aus einem im Querschnitt C-förmigen Kanal. Sie weist auf der einen Seite (rechts in Fig. 1 bzw. 3) eine nach außen abragende Lasche 2 auf, welche-gegenüber der Oberkante der Lastschiene 1 zurückversetzt ist. Die Lasche 2 ragt seitlich aus und bildet ein Auflager für einen Laderaumboden 3. Der Versatz der Lasche 2 gegenüber der Oberkante der Lastschiene 1 entspricht im Wesentlichen der Dicke des Laderaumbodens 3, so dass sich eine ebene Fläche in dem Laderaum ergibt. Die Lasche 2 ist im Wesentlichen Z-förmig ausgebildet und geht mit ihrem oberen horizontalen Schenkel in die Oberseite der Lastschiene 1 über, während der untere horizontale Schenkel nach außen absteht und als Auflager für den Laderaumboden dient.

Auf der der Lasche 2 gegenüberliegenden Seite der Lastschiene 1 ist eine nach oben offene Aufnahme 4 für die Seitenverkleidung 5 des Laderaumes o. dgl. vorgesehen. Die Aufnahme 4 steht von der Unterseite der Lastschiene 1 seitlich ab und erstreckt sich mit einem freien Schenkel schräg nach auswärts oben.

Wie in Fig. 1 dargestellt, ist in die Lastschiene 1 ein ebenfalls im Querschnitt C-förmiger Stahleinleger 6 eingesetzt, welcher an seiner nach oben weisenden offenen Seite mit Rastzähnen 7 zum Eingriff mit einer Lastöse 8 versehen ist.

Die Lastschiene 1, die vorzugsweise aus Aluminium o. dgl. besteht, und ggf. auch der Stahleinleger 6 weisen nicht dargestellte definierte Schwächungen auf, um sich im Falle eines Verkehrunfalls verformen zu können.

In Fig. 2 ist die mit der erfindungsgemäßen Lastschiene 1 zusammenwirkende Lastöse 8 dargestellt. Die Lastöse 8 umfasst hierbei einen Grundkörper 9, an dem ein Stahlbügel 10 befestigt ist. In den Stahlbügel 10 greift zum Zwecke der Verzurrung von Gegenständen in Laderäumen von Kraftfahrzeugen etwa ein Gurt oder ein Seil ein. Der Grundkörper 9 weist einen Ansatz 11 auf und kann mit diesem in den Stahleinleger 6 eingeführt und an beliebiger Stelle über nicht dargestellte Rastmittel in den Rastzähnen 7 des Stahleinlegers 6 verrastet werden.

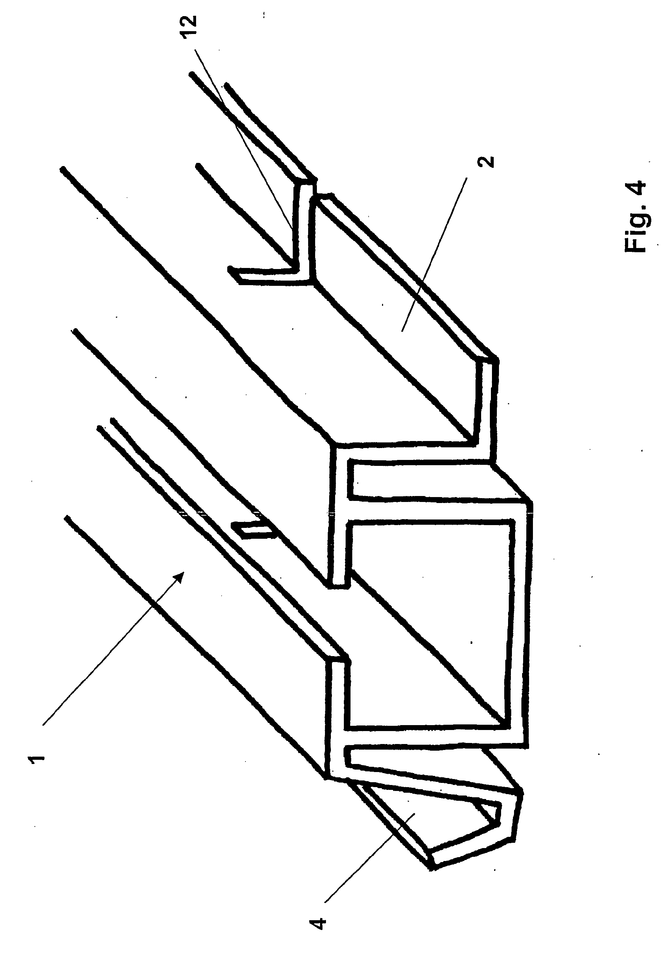

In Fig. 4 ist eine weitere Ausführungsform der erfindungsgemäßen Lastschiene 1 dargestellt. Dabei steht die auf der der Lasche 2 gegenüberliegenden Seite der Lastschiene 1 vorgesehene nach oben offene Aufnahme 4 für die Seitenverkleidung 5 des Laderaumes o. dgl. nicht - wie in Fig. 3 gezeigt - von der Unterseite der Lastschiene 1 seitlich ab, sondern sie geht von der Oberseite der Lastschiene 1 aus und erstreckt sich schräg nach unten mit einer im Wesentlichen U-förmigen Halterung am unteren Ende, welche die Aufnahme 4 für die Seitenverkleidung 5 o. dgl. bildet. Außerdem ist in Fig. 4 die definierte Schwächung 12 der Lastschiene 1 zu sehen, welche aus einem von der Unterseite der Lastschiene 1 her eingebrachten Einschnitt besteht. Dieser Einschnitt erstreckt sich quer zur Längsrichtung der Lastschiene 1 und reicht etwa über die halbe Höhe der Lastschiene 1, so dass diese in ihrem oberen Bereich durchgehend ausgebildet ist.

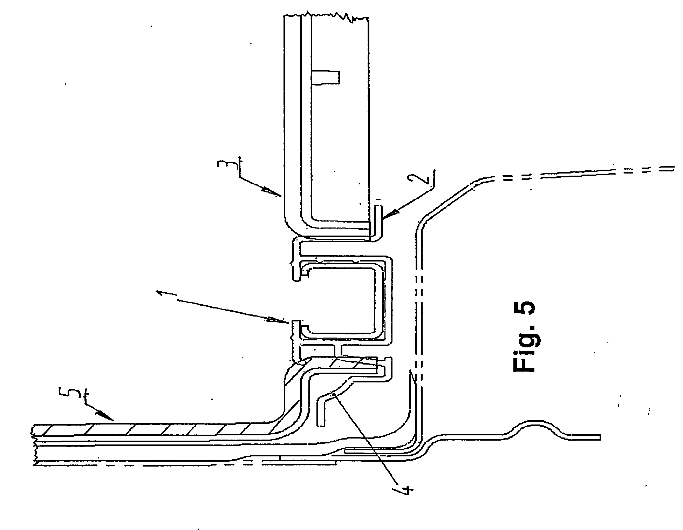

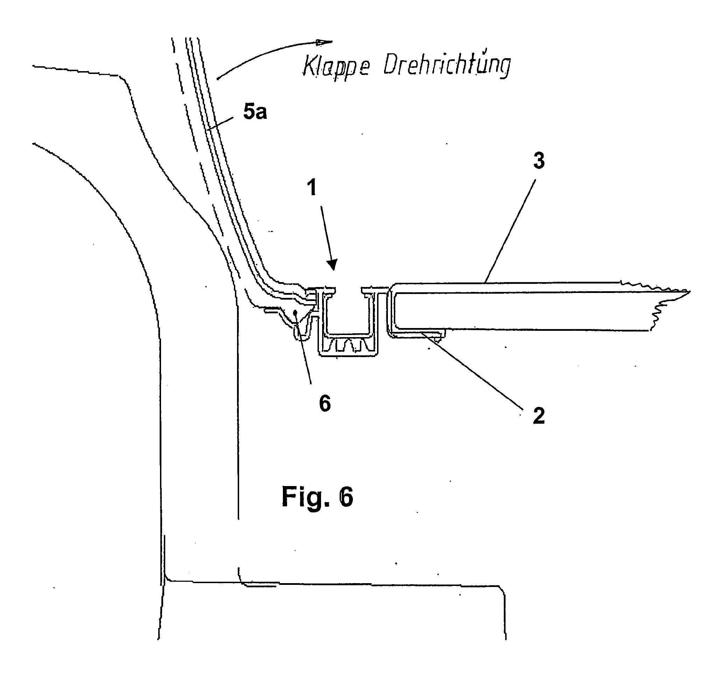

In den Fig. 4 und 5 ist eine weitere Ausgestaltungsvariante der erfindungsgemäßen Lastschiene 1 dargestellt. In beiden Figuren ist auf die Lasche 2 der Lastschiene 1 ein Laderaumboden 3 aufgelegt. Weiterhin ist in die Aufnahme 4 eine Seitenverkleidung 5 eingesetzt. Die in den Fig. 5 und 6 gezeigte Aufnahme 4 ist zusätzlich mit einem bogenförmigen Abschnitt versehen, der ein Schwenklager 6 für eine in der Seitenverkleidung 5 vorgesehene Klappe 5a bildet. Somit kann die Klappe 5a - wie durch den Pfeil in Fig. 6 gezeigt - um das Schwenklager 6 in Richtung auf das Fahrzeuginnere verschwenkt werden.

Die vorhergehende Beschreibung des Ausführungsbeispieles gemäß der vorliegenden Erfindung dient nur zu illustrativen Zwecken und nicht zum Zwecke der Beschränkung der Erfindung.

## Patentansprüche

1. Lastschiene (1) für den Laderaum eines Kraftfahrzeuges, welche zur Aufnahme einer darin verschieb- und arretierbar geführten Lastöse (9) dient, wobei die Lastschiene (1) mit einer seitlich abstehenden Lasche (2) versehen ist, welche als Auflager für einen Laderaumboden (3) dient.
**dadurch gekennzeichnet, dass** die Lasche einen horizontalen Schenkel aufweist und dass eine Schwächung (12) aus einem quer zur Längsrichtung der Lastschiene (1) verlaufenden Einschnitt besteht, der sich durch den unteren horizontalen Schenkel der Lasche (2) und von der Unterseite der Lastschiene sich lediglich über einen Teilbereich der Gesamthöhe der Lastschiene (1) erstreckt.

2. Lastschiene nach Anspruch 1,
**dadurch gekennzeichnet, dass** die Lasche (2) um die Dicke des Laderaumbodens (3) gegenüber der Oberseite der Lastschiene (1) zurückversetzt ist, so dass der Laderaumboden (3) und die Oberkante der Lastschiene (1) in einer Ebene liegen.

3. Lastschiene nach Anspruch 1 oder 2,
**dadurch gekennzeichnet, dass** die Lastschiene (1) auf der der Lasche (2) gegenüberliegenden Seite mit einer Aufnahme (4) für eine Seitenverkleidung (5) o. dgl. versehen ist.

4. Lastschiene nach einem der Ansprüche 1 bis 3,
**dadurch gekennzeichnet, dass** die Lastschiene (1) definiert geschwächt ist.

5. Lastschiene nach einem der Ansprüche 1 bis 4,
**dadurch gekennzeichnet, dass** die Lastschiene (1) einen im Querschnitt C-förmigen Kanal aufweist, in den ein ebenfalls im Querschnitt C-förmiger Stahleinleger (6) einsetzbar ist, der an seinen Rändern mit Rastzähnen (7) zur Festlegung der Lastöse (9) versehen ist.

6. Lastschiene nach einem der Ansprüche 1 bis 5,
**dadurch gekennzeichnet, dass** die Lastschiene (1) aus Aluminium o. dgl. hergestellt ist.

## Claims

1. A rail (1) for loading the cargo space in a lorry and adapted to receive a shackle (9) movable and lockable in the rail, wherein the rail (1) has a laterally projecting lug (2) for holding up a floor (3) of the cargo space,
**characterised in that** the lug has a horizontal limb and a weak place (12) in the form of a notch at an angle to the longitudinal direction of the rail (1), the notch extending through the bottom horizontal limb of the lug (2) and up from the underside of the rail over only a part of the total height of the rail (1).

2. A rail according to claim 1,
**characterised in that** the lug (2) is offset relative to the top of the rail (1) by the thickness of the floor (3), so that the floor (3) lies in the same plane as the top edge of the rail (1).

3. A rail according to claim 1 or 2,
**characterised in that** on the side opposite the lug (2), the rail (1) has a holder (4) for receiving a lateral covering (5) or the like.

4. A rail according to any of claims 1 to 3,
**characterised in that** the rail (1) is weakened in defined manner.

5. A rail according to any of claims 1 to 4,
**characterised in that** the rail (1) has a channel which is C-shaped in cross section for holding a steel insertion member (6) with a likewise C-shaped cross section and teeth (7) formed at its edges for securing the shackle (9).

6. A rail according to any of claims 1 to 5,
**characterised in that** the rail (1) is made of aluminium or the like.

## Revendications

1. Rail de charge (1) pour le volume de chargement d'un véhicule automobile servant à recevoir un anneau d'arrimage de charge (9) guidé en coulissement et susceptible d'être bloqué,
le rail de charge (1) ayant une patte (2) venant latéralement en saillie et servant d'appui pour le plancher (3) du volume de chargement,
**caractérisé en ce que**
la patte a une branche horizontale, et
un affaiblissement (12) est réalisé par une entaille transversale à la direction longitudinale du rail de charge (1), entaille qui traverse la branche horizontale inférieure de la patte (2) et arrive du côté inférieur du rail de charge uniquement dans une partie de la hauteur totale du rail de charge (1).

2. Rail de charge selon la revendication 1,
**caractérisé en ce que**
la patte (2) est décalée par rapport au côté supérieur du rail de charge (1) de l'épaisseur du plancher (3) du volume de chargement de façon que le plancher (3) du volume de chargement et l'arête supérieure du rail de charge (1) se situent dans un même plan.

3. Rail de charge selon la revendication 1 ou 2,
**caractérisé en ce que**
sur le côté opposé à la patte (2), le rail de charge (1) comporte un logement (4) pour un habillage latéral (5) ou un moyen analogue.

4. Rail de charge selon les revendications 1 à 3,
**caractérisé en ce que**
le rail de charge (1) est affaibli de manière définie.

5. Rail de charge selon les revendications 1 à 4,
**caractérisé en ce que**
le rail de charge (1) a un canal à section en forme de C dans lequel se loge un insert (6) en acier ayant également une section en forme de C, les bords de cet insert étant munis de dents d'accrochage (7) pour la fixation de l'anneau d'arrimage de charge (9).

6. Distributeur (1) selon les revendications 1 à 5,
**caractérisé en ce que**
le rail de charge (1) est fabriqué en aluminium ou en une matière analogue.
